(19) Europäisches Patentamt
European Patent Office
Office européen des brevets

(11) Publication number: 0 304 900 A2

(12) # EUROPEAN PATENT APPLICATION

(21) Application number: 88113811.9

(51) Int. Cl.4: C08G 61/08

(22) Date of filing: 24.08.88

(30) Priority: 24.08.87 US 88636

(43) Date of publication of application: 01.03.89 Bulletin 89/09

(84) Designated Contracting States: BE DE ES FR GB IT NL SE

(71) Applicant: HERCULES INCORPORATED
Hercules Plaza
Wilmington Delaware 19894(US)

(72) Inventor: Martin, Andrea Elizabeth
R.D. No 1, Box 121B Sunny Dell Road
Avondale Pennsylvania 19311(US)

(74) Representative: Lederer, Franz, Dr. et al
Van der Werth, Lederer & Riederer
Patentanwälte Lucile-Grahn-Strasse 22
D-8000 München 80(DE)

(54) **Strained ring cycloolefin polymer catalyst stream and process for making polymer.**

(57) Disclosed are thermoset polymers made by the metathesis-polymerization of strained-ring cycloolefins such as dicyclopentadiene (DCPD), typically using reaction injection molding (RIM) techniques, including a reactant mixture containing a metathesis-polymerization tungsten catalyst modified by a 2,6-dihalo-4-alkylphenol, and a process for forming such polymers having an X-ray crystallinity of at least about 20%, swell values in toluene of less than about 70%, a cis/trans ratio of less than 50/50, a flexural modulus of at least about 2.0 GPa, and a density of at least about 1.05 g/cm³.

EP 0 304 900 A2

Xerox Copy Centre

## STRAINED RING CYCLOOLEFIN POLYMER CATALYST STREAM AND PROCESS FOR MAKING POLYMER

This invention relates to the metathesis polymerization of strained-ring cycloolefins such as dicyclopentadiene (DCPD), and particularly to the composition of a reactant stream for forming the thermoset polymers, typically using reaction injection molding (RIM) techniques.

The preparation of thermoset polymers by metathesis polymerization is well known, for instance from U.S.Patents 4,400,340, 4,568,102, 4,568,660, 4,657,981 and 4,661,575. Conventionally, two or more reactant mixtures are combined, the mixtures containing between them the DCPD or other cycloolefin, one mixture containing an activator and a moderator, and the other containing a metathesis catalyst such as $WOCl_4$ or $WCl_6$ that may be solubilized with a phenolic compound such as phenol, an alkylphenol or a halogenated phenol, preferably tert-butyl phenol, tert-octyl phenol and nonyl phenol.

The products of those patents at best supply products having, when unfilled, a flexural modulus of about 1.86 GPa, a flexural strength of about 59.3 MKa, a tensile modulus of about 1.86 MPa, and a tensile strength of 33.5 MPa, with a residual monomer value of about 3.0%. They are substantially amorphous (having an undetectable level of 3x-ray crystallinity), and a swell value in boiling toluene of about 110%. (Using this swell value, the average number of monomer units between crosslinks can be calculated; for conventional poly(DCPD) that number is about 5 to 6).

For many end uses, it is desirable for crosslinked thermoset polymers to have better unfilled properties than those maximum values characterizing the known products, including a flexural modulus of at least about 2.1 GPa (300,000 psi), a tensile modulus of at least about 1.91 Gpa (278,000 psi) and a tensile strength of at least about 37.2 Mpa (5,400 psi). It would be particularly desirable to provide a poly(DCPD) with a level of x-ray crystallinity of at least 20%, and a swell value in boiling toluene of about 40%, indicating an average of only about two monomer units between crosslinks. Reduction in the percentage of residual monomer would also be desirable, since the odor of DCPD in finished products is objectionable. (Amounts of residual monomer of less than about 3% can be obtained in the known materials only by incorporating fillers, such as milled glass, wollastonite, or flame retardants).

According to the invention, a reactant mixture containing a tungsten catalyst and a phenolic compound for combining with a second reactant mixture containing a catalyst activator, in a process for the metathesis polymerization of a strained-ring cycloolefin contained in one or the other of the reactant mixtures, is characterized in that the phenolic compound is a 2,6-dihalo-4-alkylphenol in which the alkyl group contains from 1 to 18 carbon atoms.

The phenol compound is preferably a 2,6-dibromo-4-alkylphenol in which the alkyl group contains from 1 to 12 carbon atoms; most preferably it is 2,6-dibromo-4-methylphenol. Preferably, the strained-ring cycloolefin is dicyclopentadiene, and the tungsten catalyst is a metathesis-polymerization catalyst comprising $WCl_6$, or $WOCl_4$, or a combination of the two in a mole ratio of from about 9:1 to about 1:3, and the reactant mixture contains from about 1 to about 2 moles of the phenolic compound per mole of tungsten.

The reactant mixture containing the tungsten catalyst preferably contains a solvent for the catalyst selected from the group consisting of benzene, toluene, xylene, chlorobenzene, dichlorobenzene, and trichlorobenzene and the catalyst concentration is from about 0.05 to about 0.75 mole per liter of solvent. More preferably the solvent is toluene or chlorobenzene and the catalyst concentration is from about 0.2 to about 0.5 mole per liter of solvent.

Preferably the reactant mixture containing the tungsten catalyst also contains a chelating agent selected from the group consisting of acetylacetone and alkyl acetoacetates and the mole ratio of catalyst to chelating agent is from about 1:1 to about 1:5. The most preferred chelating agent is acetylacetone and the mole ratio of catalyst to chelating agent is from about 1:1 to about 1:2.

The catalyst mixture of the present invention containing 2,6-dihalo-4-alkylphenol has a uniquely high activity, resulting in very fast polymerization of monomers containing strained double bonds.

Also according to the invention, the reactant mixture according to the invention containing a tungsten catalyst and a phenolic compound is used to make a crosslinked strained-ring cycloolefin polymer that has an X-ray crystallinity of at least about 20% and a crosslink density that provides substantial insolubility and a swell value of less than about 70% in boiling toluene.

Also according to the invention, a crosslinked strained ring cycloolefin polymer is characterized in that it has an X-ray crystallinity of at least about 20% and a crosslink density that provides substantial insolubility and a swell value of less than about 70% in boiling toluene.

Preferably, the polymer has a ratio of cis/trans olefins in the polymer chain of less than about 50/50, more preferably about 37/63, a ratio of aliphatic/olefinic carbon atoms of about 6/4 (corresponding to two double bonds per monomer unit), a swell value in toluene of less than about 60% (most preferably less than

about 50%), and an X-ray crystallinity of about 40%.

The density of the polymer is at least about 1.05 g/cm³, preferably at least about 1.06 g/cm³, and it is insoluble in common solvents such as gasoline, naphthas, chlorinated hydrocarbons, and aromatics. It is resistant to flow at temperatures as high as 350° C.

The thermoset dicyclopentadiene polymers of the invention have flexural modulus of at least about 2.1 GPa (300,000 psi), tensile modulus of at least about (552 MPa) (80,000 psi), and a density of at least about 1.05 g/cm³. The X-ray crystallinity of at least about 20% means that they are wholly metathesis-polymerized.

Also according to the invention, the reactant mixture according to the invention containing a tungsten catalyst and a phenolic compound is used in a process for the polymerization of dicyclopentadiene by contacting it with a metathesis catalyst activator and monomeric DCPD at a temperature of from about 30 to about 100° C in a DCPD-to-tungsten mole ratio of from about 1000:1 to about 15000:1.

Also according to the invention, a process for the polymerization of dicyclopentadiene comprising contacting a catalyst comprising $WCl_6$, or $WOCl_4$, or a mixture of both, and a phenolic compound, with a metathesis catalyst activator selected from the group consisting of an alkyl aluminum halide or trialkyl aluminum in which the alkyl group contains from 1 to 10 carbon atoms, or a mixture of both in a mole ratio of from about 9:1 to about 1:3, and with monomeric DCPD, at a temperature of from about 30 to about 100° C in a DCPD-to-tungsten mole ratio of from about 1000:1 to about 15000:1, is characterized in that the phenolic compound is 2,6-dihalo-4-alkylphenol in which the alkyl group contains from 1 to 18 carbon atoms.

Preferably, the catalyst and the phenolic compound are in the reactant mixture according to the invention. Also preferably, from about 1 to about 2 moles of the phenolic compound per mole of the tungsten catalyst is contacted with the activator and the DCPD, and the catalyst is a mixture of $WCl_6$ and $WOCl_4$ in a mole ratio of from about 8:1 to about 1:1, most preferably from about 4:1 to about 2:1. The phenol compound is preferably 2,6-dibromo-4-alkylphenol in which the alkyl group contains from 1 to 12 carbon atoms; most preferably it is 2,6-dibromo-4-methylphenol.

Preferably the catalyst activator is diethyl or dioctyl aluminum chloride or iodide, ethyl or octyl aluminum dichloride, triethyl or trioctyl aluminum, or mixtures of any of them, more preferably diethyl aluminum chloride or trioctyl aluminum or a mixture of the two, or a mixture of dioctyl aluminum iodide and trioctyl aluminum.

Preferably the process is carried out at a temperature of from about 30 to about 50° C.

The process for the metathesis polymerization of dicyclopentadiene according to the invention preferably involves a two-part system, in which one part comprises the metathesis catalyst (and is the reactant mixture according to the invention) and the other part comprises the catalyst activator and a rate moderator (most preferably using the reaction injection molding (RIM) process involving the mixing of two or more low-viscosity reactant mixtures that are injected into a mold). The rate moderator is in the ratio of from about 1:1 to about 1:5 relative to the activator, and the moderator is selected from the group consisting of dimethyl ether of diethylene glycol(diglyme) isopropyl ether, di-n-butyl ether, ethyl benzoate, phenyl ethyl acetate and diisopropyl ketone. Most preferably the moderator is diglyme.

In the case of DCPD, metathesis polymerization results predominantly in ring opening of the strained norbornene double bond, with further ring opening of the cyclopentene double bond, depending on the activity of the catalyst. In the metathesis-polymerization process according to the invention, the number of double bonds in the monomer is retained in the polymer, while in Ziegler-Natta type polymerization, the double bonds are converted to single bonds. Thus, the extent of metathesis polymerization relative to Ziegler-Natta type polymerization is determined by the deviation from the ideal aliphatic/olefinic carbon ratio as determined by nuclear magnetic resonance using carbon-13 ($^{13}C$ NMR). The ideal ratio for an exclusively metathesis-polymerized polyDCPD is 4/6. The polyDCPD of this invention shows no deviation from this ratio. (The estimated error of the method is such that the percentage of metathesis polymerization relative to Ziegler-Natta type polymerization is at least 95%).

The improved catalyst activity of the catalyst used according to the invention, which is modified by the specific phenolic compound, results in shorter induction time and the desired lower level of the foul smelling unreacted monomer remaining in the polymer, while retaining the impact strength and tensile elongation of the polymers at the level required for most applications, especially for composites.

The polymer structure, as determined by solid state $^{13}C$ NMR, is also quite different from previously known polymeric (DCPD). Since the novel poly(DCPD) of the present invention has a ratio of cis/trans olefins in the polymer chain of less than about 50/50 (normally at the preferred value of about 37/63), it is predominantly a trans polymer, whereas standard poly(DCPD) has a corresponding ratio of about 54/46.

Polarized light microscopy (which shows the presence of birefringence) and X-ray diffraction studies are used to determine that the poly(DCPD) of the present invention has an X-ray crystallinity as high as about

40%. Being a semi-crystalline material, it generally has a density about 3% higher than conventional poly-(DCPD).

To prepare the reactant mixture containing the tungsten catalyst in a solvent for the catalyst, a suitable catalyst precursor such as tungsten hexachloride is conventionally slurried in the dry solvent under an inert atmosphere. Depending upon the purity of the tungsten compound, t-butanol may or may not be added, according to conventional practice. If the tungsten compound is very pure, it is normally preferred to add up to about 0.25 mole of t-butanol per mole of tungsten. If the $WCl_6$, for instance, already contains some $WOCl_4$, the addition of t-butanol is unnecessary. From about 1 to about 2 moles of the 2,6-dihalo-4-alkylphenol is added next. Not only does that specific phenol act as a solubilizing agent but according to the invention, it surprisingly also drastically affects the catalyst activity and reactivity. Optionally, the chelating agent is then added to deactivate the catalyst until it is subsequently contacted with the activator. To the mixture may be added (if it is not to be added to the second reactant mixture containing the activator) sufficient dicyclopentadiene of conventional purity to form a solution of the desired concentration for use in the polymerization process. With the chelating agent present, the solution has a shelf life of several months.

The second reactant mixture (activator mixture) is prepared by dissolving the organometallic activator in DCPD along with the reaction rate moderator. A solution of any desired concentration can easily be prepared. The moderator also acts to stabilize the activator mixture until contacted with the catalyst mixture. The activator mixture has a shelf life of several months.

In carrying out the polymerization process of the present invention by the RIM method, the DCPD to tungsten mole ratio should be from about 1000:1 to about 15,000:1, preferably from about 1500:1 to about 2500:1 and the DCPD to catalyst activator mole ratio should be from about 100:1 to about 2000:1, preferably from about 500:1 to about 1000:1. The two reactant mixtures are combined in the RIM machine's mixing head and then injected into a mold where they quickly polymerize into a solid, infusible mass. Of course, the invention is not intended to be limited to systems employing two mixtures, nor to systems employing two mixtures with each containing monomer. There may be situations where it is desirable to have monomer incorporated in just one mixture or to employ more than two mixtures where the additional mixtures contain monomer and/or additives.

Conventionally, various additives can be included to modify the properties of the poly(DCPD) of the present invention. Accordingly, additives include fillers (e.g., glass, wollastonite, mica, carbon black, talc, and calcium carbonate), pigments, flame retardants, antioxidants (e.g., a phenolic or amine antioxidant), light stabilizers, and polymeric modifiers (e.g., elastomers). The addition of an elastomer can increase the impact strength of the polymer 5 to 10 fold with only a slight decrease in flexural modulus. The elastomer can be dissolved in one or both of the reactant mixtures. The amount of elastomer used is determined by its molecular weight and by the initial viscosity of the mixtures to which it is added. Amounts within the range of 1 to 10% by weight and preferably 5 to 10% by weight of the total mixture can be used without causing an excessive increase in solution viscosity. An example of preferred elastomer is styrene-butadiene rubber made by solution polymerization. The addition of about 6% of this elastomer to a dicyclopentadiene mixture increases the viscosity to about 300 cps. The mixtures cannot be so viscous that adequate mixing of the mixtures is not possible, but increasing the viscosity to between about 300 cps and 1,000 cps improves the mold filling characteristics of the combined mixtures. The elastomer is preferably added to both reactant mixtures so that the viscosities of two mixtures are similar. When the two mixtures have similar viscosities, more uniform mixing is obtained when the mixtures are combined. An increase in viscosity also reduces leakage from the mold and simplifies the use of fillers by decreasing the setting rate of solid filler materials. Useful elastomers can be unsaturated hydrocarbon elastomers such as styrene-butadiene rubber, polyisoprene, polybutadiene, natural rubber, butyl rubber, styrene-isoprene-styrene triblock rubber, styrene-butadiene styrene triblock rubber, and ethylene-propylene diene terpolymers; or saturated such as polyisobutylene and ethylenepropylene copolymer. It is believed that a saturated elastomer forms a semi-interpenetrating network when present during the polymerization of a cycloolefin, such as dicyclopentadiene. Unsaturated elastomers are believed to form interpenetrating networks with the polymerized units of cycloolefin, such as dicyclopentadiene, when present during the polymerization of the monomer. In either case, little or none of the elastomer can be removed by extraction. Other suitable additives are ester plasticizers, e.g., di(2-ethylhexyl)phthalate, di(2-ethylhexyl)adipate, butyl benzyl phthalate, di-n-butyl sebacate, or esters of glycerol with palmitic, or oleic, or linoleic, or butyric acids. These esters result in softer, more elastic polymer having a higher impact resistance and greater flexibility than is obtainable with the unmodified polymer.

If a cellular crosslinked poly(DCPD) product is desired, there can be included in at least one of the reactant mixtures a blowing agent such as pentane, hexane, methylene chloride, trichlorofluoromethane,

nitrogen, argon, dichlorodifluoromethane, etc.

Strained-ring cycloolefins other than DCPD can be polymerized according to the present invention, either with DCPD or instead of DCPD. Suitable strained ring cycloolefins are of the norbornene type defined by formula (I), and 1.4.5.8- dimethano-1,4,4a,5,8,8a-octahydronaphthalene (DMON) and substituted DMON of the general formula (II) as follows:

(I)

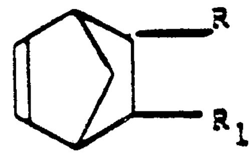

(II)

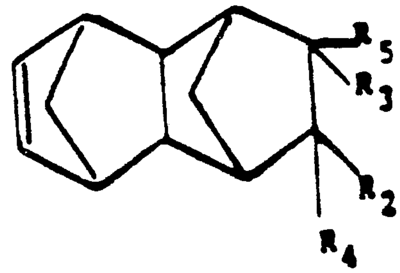

in which R, $R_1$, $R_2$, $R_3$, $R_4$ and $R_5$ are each independently hydrogen, alkyl of from 1-10 carbon, halogen substituted alkyl, aryl, substituted aryl (where substituents are alkyl, aryl or halogen) or saturated and unsaturated hydrocarbon cyclic groups formed by R and $R_1$ or $R_2$ and $R_3$ together with the two ring carbon atoms bonded thereto. Examples of such cycloolefins include norbornene, norbornadiene, dimethanohexahydronaphthalene (tetracyclododecadiene), dimethanooctahydronaphthalene (tetracyclododecene), cyclopentadiene trimer or higher oligomers, and the adduct of cyclooctadiene with cyclopentadiene.

It is also possible, according to the present invention, to tailor the polymer properties by using mixtures of the 2,6-dihalo-4-alkylphenol based catalyst of the present invention with a conventional, standard alkyl phenol (such as the standard nonylphenol) based catalyst. In such "mixed" catalyst from about 10 to about 60 percent of the phenolic compound can be 2,6-dihalo-4-alkylphenol. Preferably the amount of 2,6-dihalo-4-alkylphenol in the "mixed" catalyst is from about 20 to about 50 percent of the phenolic compound and most preferably it is from about 25 to about 40 percent. Surprisingly, the use of a mixture of the "fast" catalyst used in the present invention with the "standard" or conventional catalysts results in a polymer having higher plate impact strength than polymer prepared with either catalyst alone. The glass transition temperature ($T_g$) is also slightly higher, while most other properties are comparable.

The following examples are given for the purpose of illustrating the present invention. All parts and percentages are by weight unless otherwise indicated.

## Example 1 and Comparative Example C-1

One (1) equivalent of pure $WCl_6$ was slurried under an inert atmosphere in sufficient dry toluene to make a 0.75 molar slurry. To this slurry was added 0.25 equivalent of t-butanol as an oxygen donor to convert a portion of $WCl_6$ to $WOCl_4$. The mixture was sparged with dry nitrogen for about an hour to sweep out hydrogen chloride after which 1.2 equivalent of 2,6-dibromo-4-methylphenol dissolved in toluene was added. Again, the reaction mix was sparged with dry nitrogen. Two (2) equivalents of acetylacetone were added and the solution was sparged with dry nitrogen for several more hours to remove all residual hydrogen chloride. Any toluene carried off by the nitrogen sparge was made up to regain the desired 0.75 molar tungsten concentration.

A first reaction solution was prepared comprised of 3.4 kg (7.5 lbs.) of dicyclopentadiene containing 6% by weight of random styrene/butadiene rubber ("Stereon" 720A by B. F. Goodrich), 75 grams of diphenylphenylenediamine (DPPD) antioxidant, 15 ml of beta-damascenone deodorant and 68.7 ml of the 0.75 molar catalyst solution. Likewise, a second reaction solution was prepared comprised of 3.4 kg (7.5 lbs.) of the DCPD/rubber solution and 108.5 ml of a diethyl aluminum chloride(DEAC)/butyl ether (BE) mixture. The ratios of reactants were selected so as to yield a DCPD/W/DEAC/BE mole ratio of about 1,000/1/3/5.5.

The two reaction solutions were simultaneously injected via an Accuratio RIM machine into a mold (mold temp.: 60°C, reaction solution temp.: 40°C). Reaction was essentially complete in about 12 seconds yielding a hard, somewhat brittle plaque. Properties of this polymer are set forth in Table 1 along with comparative data for a polymer prepared according to the method disclosed in Example 27 of U.S. Patent 4,657,981, except that the resin composition was 94% by weight of dicyclopentadiene and 6% by weight of Stereon 720A elastomer.

Table 1

| | Example C-1 Klosiewicz | | Example 1 | |
|---|---|---|---|---|
| Flex Modulus GPa (kpsi) | 1.8 | (260) | 2.5 | (365.0) |
| Flex Strength MPa (kpsi) | 69.0 | ( 10) | 96.0 | ( 13.9) |
| Plate Impact Strength joules (ft lbs) | 14.9 | ( 11) | 4.6 | ( 3.4) |
| Notched Izod Impact Strength joules/meter (ft lbs/in) | 427.0 | ( 8) | 27.0 | ( 0.5) |
| Tensile Impact Strength joules/meter$^2$ (ft lbs/sq ft) | - | (-) | 1.1 | ( 8.5) |
| Tensile Modulus GPa (kpsi) | 1.1 | (160) | 1.9 | (278.0) |
| Tensile Strength MPa (kpsi) | 34.0 | ( 5) | 37.0 | ( 5.4) |
| Tensile Elongation, % | 60.0 | | 5.0 | |
| Swell, % | 90.0 | | 40.0 | |
| Residual Monomer, % | 1-2 | | 0.1 | |
| Olefin Cis/Trans Ratio (C-13 NMR) | 54/46 | | 37/63 | |
| X-ray Crystallinity, % | 0 | | 40.0 | |

## Examples 2 and 3

First reaction solutions (catalyst solutions) were prepared comprised of 3.4 kg (7.5 lbs.) of DCPD containing 6% of rubber, 75 grams of DPPD antioxidant, 15 ml of beta-damascenone deodorant and a mixture of the "fast" catalyst of this invention based on 2,6-dibromo-4-methylphenol and "standard" catalyst based on nonylphenol in 25:75 and 50:50 mole ratios, respectively; such that the DCPD/W mole ratio was 1000/1.

The second reaction solution (activator solution) used with each of the above catalyst solutions was the same and comprised of 3.4 kg (7.5 lbs) of DCPD containing 6% of rubber and 146 ml of a mixture consisting of 0.85 moles of tri-n-octylaluminum (TNOA), 0.15 moles of dioctylaluminum iodide (DOAI) and 1.0 mole of dimethyl ether of diethylene glycol [diglyme (DG)], such that the DCPD/Al mole ratio was 1000/3.

Polymerization was carried out wherein an equal amount of catalyst solution and activator solution were mixed in the mix head of a RIM machine and injected into a 250 x 250 x 3 mm (10" x 10" x 1/8") plaque mold. The plaque was demolded in about 15 seconds.

Properties of the polymers obtained are summarized in Table 2.

Table 2

| | Example 2 | | Example 3 | |
|---|---|---|---|---|
| Catalyst Ratio (Fast/Standard) | 25/75 | | 50/50 | |
| Flex Modulus GPa (kpsi) | 1.6 | (225) | 1.7 | (252) |
| Flex Strength MPa (kpsi) | 61.0 | ( 8.9) | 66.0 | ( 9.6) |
| Plate Impact Strength joules (ft lbs) | 20.0 | ( 15.0) | 20.0 | ( 14.4) |
| Notched Izod Impact Strength joules/meter (ft lbs/in) | 427.0 | ( 8.0) | 448.0 | ( 8.4) |
| Tensile Impact Strength joules/meter$^2$ (ft lbs/sq ft) | - | | 9.4 | ( 75) |
| Tensile Modulus GPa (kpsi) | 1.2 | (179.0) | 1.2 | (178.0) |
| Tensile Strength MPa (kpsi) | 33.0 | ( 4.8) | 34.0 | ( 5.0) |
| Tensile Elongation, % | 60.0 | | 80.0 | |
| Swell, % | - | | 80.0 | |
| Residual Monomer, % | 3.2 | | 4.2 | |
| $T_g$, ° C | 130 | | 120 | |

## Example 4 and Comparative Examples C-2 to C-7

In a stoppered test tube under inert atmosphere was placed 5 ml of high purity DCPD and added thereto was 0.16 ml of a 0.35M solution of DEAC/butyl ether (1/6) in toluene. Next there was added 0.19 ml of a 0.1M catalyst solution prepared according to the procedure of Example 1, except that $WCl_6$ was supplied by GTE Sylvania and t-butanol was not added. The test tube was shaken rapidly to mix the contents and the exothermic polymerization was recorded on a chart recorder with a thermocouple.

Following the above procedure, catalyst solutions with different phenolic compounds were prepared and the compositions and results are summarized in Table 3. The results for the catalyst of the present invention are also given in Table 3. For the other phenolic compounds, the differences in the Delta T's (defined as the difference, in ° C, between the initial and final temperatures) and gel values are insignificant. There was some variation in $t_{1/2}$ (defined as the time, in seconds, between mixing and the half height of the exotherm) with the reproducibility being about 10 seconds. The differences in percent DCPD residue were real but with the exception of the t-butyl phenol were not of great significance. The cis/trans olefin ratio was practically the same for the other phenolic compounds. On the other hand, the "fast" catalyst of the present invention resulted in poly(DCPD) having a clearly different cis/trans ratio, a greater Delta T, and a lower swell value.

Table 3

| Example | Phenolic Compound | Delta T, ° C | $T_{1/2}$ sec. | Residual DCPD % | Gel. % | Swell. % | cis/trans. % IR | cis/trans. % NMR* |
|---|---|---|---|---|---|---|---|---|
| C-2 | nonylphenol ("standard") | 166 | 35 | 1.0 | 97.1 | 93.0 | 80/20 | 54/46 |
| C-3 | 4-t-butyl phenol | 164 | 30 | 3.0 | 97.0 | 70.0 | 80/20 | |
| C-4 | phenol | 161 | 55 | 1.5 | 96.0 | 84.1 | 85/15 | |
| C-5 | p-bromo phenol | 164 | 15 | 1.0 | 97.2 | 54.4 | 80/20 | |
| C-6 | p-methoxy phenol | 160 | 30 | 0.4 | 96.2 | 116.0 | 80/20 | |
| C-7 | 2,4,6-tribromo phenol | 167 | 40 | 0.67 | 97.5 | 63.2 | 70/30 | |
| 4 | 2,6-dibromo-4-methyl phenol ("fast") | 176 | 15 | 0.14 | 97.3 | 39.7 | 35/65 | 37/63 |

* Because of the high expense of the test, only 2 samples were examined by NMR; however, since the IR values for C-2 to C-7 are similar, the NMR values for same are also expected to be similar.

## Examples 5 to 9

The procedure for preparing polymer samples in test tubes according to Example 4 was followed. Mixed catalysts were prepared by mixing appropriate volumes of 0.5 M "fast" catalyst as prepared in Example 1 with appropriate volumes of 0.5 M toluene solution of "standard" catalyst prepared according to Example 53 of Leach USP 4,598,102, except that the t-butanol/$WCl_6$ molar ratio was 0.25. Example 4 was then followed, using the mixed catalyst. Cocatalysts (activators) employed were either tri-n-octylaluminum (TNOA) mixed with dioctylaluminum iodide (DOAI) and moderated with diglyme (DG), or DEAC moderated with BE. Catalyst and cocatalyst compositions, and the results of DCPD polymerizations with the mixed catalysts are summarized in Table 4.

Table 4

| Example | "Fast" Catalyst mole % | Delta T, °C | $t_{1/2}$ sec. | Residual DCPD % | Swell % | Cocatalyst |
|---|---|---|---|---|---|---|
| 5 A | 1 | 173 | 63 | 0.74 | 62 | TNOA/DOAI/DG |
| 5 B | 1 | 168 | 61 | 0.30 | 93 | DEAC/BE |
| 6 A | 20 | 177 | 53 | 0.71 | 59 | TNOA/DOAI/DG |
| 6 B | 20 | 183 | 44 | 0.30 | 51 | DEAC/BE |
| 7 A | 40 | 178 | 35 | 0.68 | 54 | TNOA/DOAI/DG |
| 7 B | 40 | 178 | 43 | 0.39 | 44 | DEAC/BE |
| 8 A | 60 | 181 | 33 | 1.07 | 46 | TNOA/DOAI/DG |
| 8 B | 60 | 180 | 45 | 0.49 | 39 | DEAC/BE |
| 9 A | 80 | 167 | 30 | 4.07 | 27 | TNOA/DOAI/DG |
| 9 B | 80 | 182 | 33 | 0.68 | 35 | DEAC/BE |

## Example 10 and Comparative Example C-8

In this example, a monomer mixture comprised of (by weight) 75% of dicyclopentadiene and 25% of dimethanooctahydronaphthalene (DMON) including 6% by weight of Stereon 720A rubber was polymerized in a RIM machine using both the standard catalyst and the catalyst of the present invention (cf. Example 1 and Comparative Example C-1). The physical properties of the copolymers are shown in Table 5. Virtually all of the physical properties of copolymers made with the new catalyst were better than their standard counterparts.

Table 5

| | Example 10 | | Example C-8 | |
|---|---|---|---|---|
| Flex Modulus GPa (kpsi) | 2.0 | (292.0) | 1.8 | (268.0) |
| Flex Strength MPa (kpsi) | 90.0 | ( 13.1) | 78.0 | ( 11.3) |
| Tensile Modulus GPa (kpsi) | 1.4 | (197.0) | 1.2 | (175.0) |
| Tensile Strength MPa (kpsi) | 56.0 | ( 8.1) | 42.0 | ( 6.1) |
| Tensile Elongation, % | 85.0 | | 40.0 | |
| Plate Impact Strength joule (ft lbs) | 19.9 | ( 14.7) | 13.6 | ( 10.0) |
| Notched Izod Impact Strength joules/meter (ft lbs/in notch) | 304.0 | ( 5.7) | 347.0 | ( 6.5) |
| Tensile Impact Strength joules/meter$^2$ (ft lbs/sq ft) | 8.3 | ( 66.0) | 5.8 | ( 46.0) |
| Residual Monomer, % | 1.45 | | 1.6 | |
| Swell, % | 101.0 | | 133.0 | |

Examples 11 to 15

Test tube polymer samples were prepared containing DCPD and various amounts of DMON following the procedure described in Example 4, using "fast" catalyst prepared according to the procedure of Example 1. Composition and results are summarized in Table 6.

Table 6

| Example | DMON mole % | Delta T °C | $t_{1/2}$ sec. | Residual DCPD % | Swell % |
|---|---|---|---|---|---|
| 11 | 1 | 181 | 15 | 0.21 | 35 |
| 12 | 5 | 180 | 20 | 0.13 | 41 |
| 13 | 10 | 177 | 25 | 0.14 | 45 |
| 14 | 15 | 176 | 25 | 0.18 | 51 |
| 15 | 25 | 170 | 29 | 0.14 | 62 |

**Claims**

1. A reactant mixture containing a tungsten catalyst and a phenolic compound for combining with a second reactant mixture containing a catalyst activator, in a process for the metathesis polymerization of a strained-ring cycloolefin contained in one or the other of the reactant mixtures, characterized in that the phenolic compound is a 2,6-dihalo-4-alkylphenol in which the alkyl group contains from 1 to 18 carbon atoms.

2. A reactant mixture as claimed in claim 1, further characterized in that the phenolic compound is a 2,6-dibromo-4-alkylphenol in which the alkyl group contains from 1 to 12 carbon atoms.

3. A reactant mixture as claimed in claim 2, further characterized in that the phenolic compound is 2,6-dibromo-4-methylphenol.

4. A reactant mixture as claimed in claim 1 or 2 or 3 further characterized in that the tungsten catalyst is a metathesis-polymerization catalyst comprising $WCl_6$, or $WOCl_4$, or a combination of the two in a mole ratio of from about 9:1 to about 1:3.

5. A reactant mixture as claimed in any of the preceeding claims, further characterized in that it contains from about 1 to about 2 moles of the phenolic compound per mole of tungsten.

6. A reactant mixture as claimed in any of the preceeding claims, further characterized in that it contains a solvent for the catalyst selected from the group consisting of benzene, toluene, xylene, chlorobenzene, dichlorobenzene, and trichlorobenzene and the catalyst concentration is from about 0.05 to about 0.75 mole per liter of solvent.

7. A reactant mixture as claimed in claim 6, further characterized in that the solvent is toluene or chlorobenzene and the catalyst concentration is from about 0.2 to about 0.5 mole per liter of solvent.

8. A reactant mixture as claimed in any of the preceeding claims, further characterized in that it also contains a chelating agent selected from the group consisting of acetylacetone and alkyl acetoacetates and the mole ratio of catalyst to chelating agent is from about 1:1 to about 1:5.

9. A reactant mixture as claimed in claim 8, further characterized in that the chelating agent is acetylacetone and the mole ratio of catalyst to chelating agent is from about 1:1 to about 1:2.

10. A reactant mixture as claimed in any of the preceeding claims, further characterized in that the strained-ring cycloolefin is contained in it and is dicyclopentadiene.

11. Use of the reactant mixture as claimed in any of the preceeding claims to make a crosslinked strained-ring cycloolefin polymer that has an X-ray crystallinity of at least about 20% and a crosslink density that provides substantial insolubility and a swell value of less than about 70% in boiling toluene.

12. A crosslinked strained-ring cycloolefin polymer characterized in that it has an X-ray crystallinity of at least about 20%, and a crosslink density that provides substantial insolubility as well as a swell value of less than about 70% in boiling toluene.

13. A cycloolefin polymer as claimed in claim 12, further characterized in that it has a ratio of cis/trans olefins in the polymer chain of less than about 50/50.

14. A cycloolefin polymer as claimed in claim 13, further characterized in that the ratio of cis/trans olefins in the polymer chain is about 37/63.

15. A cycloolefin polymer as claimed in claim 12, 13, or 14, further characterized in that it has a ratio of aliphatic/olefinic carbon atoms of about 6/4.

16. A cycloolefin polymer as claimed in any of claims 12 to 15, further characterized in that it has a swell value in boiling toluene of less than about 60%.

17. A cycloolefin polymer as claimed in claim 16, further characterized in that the swell value in boiling toluene is less than about 50%.

18. A cycloolefin polymer as claimed in any of claims 12 to 15, further characterized in that it has an X-ray crystallinity of about 40%.

19. A cycloolefin polymer as claimed in any of claims 12 to 18, further characterized in that its density is at least about 1.05 $g/cm^3$.

20. A cycloolefin polymer as claimed in claim 19, further characterized in that its density is at least about 1.06 $g/cm^3$.

21. A cycloolefin polymer as claimed in any of claims 12 to 20, further characterized in that it has a flexural modulus of at least about 2.1 GPa, a tensile modulus of at least about (552 MPa), and a density of at least about 1.05 $g/cm^3$.

22. A crosslinked strained-ring cycloolefin polymer as claimed in any of claim 12 to 21, further characterized in that the strained-ring cycloolefin is dicyclopentadiene.

23. A crosslinked strained-ring cycloolefin polymer as claimed in any of claims 12 to 21, further characterized in that the cycloolefin polymer is a metathesis-polymerized thermoset copolymer of dicyclopentadiene and another strained ring cycloolefin.

24. Use of the reactant mixture as claimed in any of claims 1 to 11 in a process for the polymerization of dicyclopentadiene by contacting the reactant mixture with a metathesis catalyst activator and monomeric DCPD at a temperature of from about 30 to about 100 °C in a DCPD-to-tungsten mole ratio of from about 1000:1 to about 15000:1.

25. A process for making the cycloolefin polymer as claimed in any of claims 12 to 23, comprising contacting the reactant mixture as claimed in any of claims 1 to 11 with a metathesis-catalyst activator selected from the group consisting of an alkyl aluminum halide or trialkyl aluminum in which the alkyl group contains from 1 to 10 carbon atoms, or a mixture of both in a mole ratio of from about 9:1 to about 1:3, and with monomeric DCPD, at a temperature of from about 30 to about 100 °C in a DCPD-to-tungsten mole ratio of from about 1000:1 to about 15000:1.

26. A process for the polymerization of dicyclopentadiene comprising contacting a catalyst comprising $WCl_6$, or $WOCl_4$, or a mixture of both, and a phenolic compound, with a metathesis-catalyst activator selected from the group consisting of an alkyl aluminum halide or trialkyl aluminum in which the alkyl group contains from 1 to 10 carbon atoms, or a mixture of both in a mole ratio of from about 9:1 to about 1:3, and with monomeric DCPD, at a temperature of from about 30 to about 100 °C in a DCPD-to-tungsten mole ratio of from about 1000:1 to about 15000:1, characterized in that the phenolic compound is a 2,6-dihalo-4-alkylphenol in which the alkyl group contains from 1 to 18 carbon atoms.

27. A process for the polymerization of dicyclopentadiene as claimed in claim 26, further characterized in that from about 1 to about 2 moles of the phenolic compound per mole of the tungsten catalyst is contacted with the activator and the DCPD, and the catalyst is a mixture of $WCl_6$ and $WOCl_4$ in a mole ratio of from about 8:1 to about 1:1, most preferably from about 4:1 to about 2:1.

28. A process for the polymerization of dicyclopentadiene as claimed in claim 26 or 27, further characterized in that the phenol compound is a 2.6-dibromo-4-alkylphenol in which the alkyl group contains from 1 to 12 carbon atoms.

29. A process for the polymerization of dicyclopentadiene as claimed in claim 28, further characterized in that the phenol compound is 2,6-dibromo-4-methylphenol.

30. A process for the polymerization of dicyclopentadiene as claimed in any of claims 26 to 29, further characterized in that the process is carried out at a temperature of from about 30 to about 50 °C.

31. A process for the polymerization of dicyclopentadiene as claimed in any of claims 26 to 30, further characterized in that the catalyst and the phenolic compound are in the reactant mixture as claimed in any of claims 1 to 11.